(19) Europäisches Patentamt
European Patent Office
Office européen des brevets

(11) **EP 3 940 537 A1**

(12) **EUROPEAN PATENT APPLICATION**

(43) Date of publication:
**19.01.2022 Bulletin 2022/03**

(21) Application number: **21169839.4**

(22) Date of filing: **22.04.2021**

(51) International Patent Classification (IPC):
**G06F 9/50** (2006.01)    **G06F 8/60** (2018.01)

(52) Cooperative Patent Classification (CPC):
**G06F 9/5072; G06F 8/60; G06F 9/5083;**
**G06F 9/455**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2020 JP 2020120377**

(71) Applicant: **FUJITSU LIMITED**
**Kanagawa 211-8588 (JP)**

(72) Inventor: **Shiraishi, Takashi**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **CONTAINER DEPLOYMENT CONTROL METHOD, GLOBAL MASTER DEVICE, AND MASTER DEVICE**

(57)    A container deployment control method executed by a system that includes a global master device and a plurality of master devices, the method includes transmitting, by the global master device, a resource condition needed for deployment of a container to be deployed to each of the plurality of master devices; identifying, by each of the plurality of master devices, a result which indicates whether a resource in a cluster in which each of the plurality of master devices is deployed satisfies the resource condition; transmitting, by each of the plurality of master devices, the result to the global master device; and specifying, by the global master device, a cluster to be a deployment destination of the container to be deployed by using the result.

## FIG. 7

**Description**

FIELD

The present embodiments relate to a container deployment control method and a global master device, and a master device.

BACKGROUND

In recent years, there is progress in application of container-type virtualization technology for simplifying recovery from failures and distributing a processing load by packaging modules that are executed to provide services on a unit basis called container and combining such containers.

Such container-type virtualization technology is implemented by deploying containers not including kernel. Therefore, the container-type virtualization technology can reduce the amount of physical resources used as compared with virtualization technology using a virtual machine (VM) (hereinafter also referred to as VM-type virtualization technology).

Therefore, in recent years, there has been an active shift from information processing systems using the VM-type virtualization technology to information processing systems using the container-type virtualization technology. For example, Japanese Laid-open Patent Publication No. 2018-028824, Japanese Laid-open Patent Publication No. 2015-158811, and the like are disclosed as related art.

SUMMARY

[TECHNICAL PROBLEM]

Here, management of the above-described containers is performed for each cluster including a plurality of nodes (hereinafter also referred to as server devices) deployed in close locations, for example. Specifically, for example, in each cluster, each of the containers is managed by a master device or the like that deploys the containers to each of the nodes. As a result, in an information processing system using container-type virtualization technology (hereinafter, also simply referred to as an information processing system), it becomes possible to distribute new containers among a plurality of master devices. Therefore, an information processing system can suppress an increase in time needed for deploying a new container even in a case where the number of containers to be managed is enormous or in a case where a deployment request of a new container occurs frequently.

Here, in the case of managing the containers for each cluster, as described above, the information processing system deploys a global master device that manages the master device in each of the clusters from the needs of managing the plurality of clusters in an integrated manner.

For example, when the global master device receives such deployment request of the new container, the global master device issues a new container deployment instruction to the master device of the cluster specified in advance by an administrator. Then, the master device that has received the deployment instruction determines a node for deploying the new container from the nodes to be managed.

However, the master device that has received the deployment instruction is not able to deploy the new container in a case where a node capable of deploying the new container is not present in the nodes to be managed. Therefore, in this case, the global master device needs to issue the new container deployment instruction to the master device of another cluster, and is not able to efficiently deploy the new container.

[SOLUTION TO PROBLEM]

According to an aspect of the embodiments, a container deployment control method executed by a system that includes a global master device and a plurality of master devices, the method includes transmitting, by the global master device, a resource condition needed for deployment of a container to be deployed to each of the plurality of master devices; identifying, by each of the plurality of master devices, a result which indicates whether a resource in a cluster in which each of the plurality of master devices is deployed satisfies the resource condition; transmitting, by each of the plurality of master devices, the result to the global master device; and specifying, by the global master device, a cluster to be a deployment destination of the container to be deployed by using the result.

BRIEF DESCRIPTION OF DRAWINGS

FIG. 1 is a diagram for describing a configuration of an information processing system;

FIG. 2 is a diagram for describing the configuration of the information processing system;

FIG. 3 is a diagram for describing a hardware configuration of a global master device;

FIG. 4 is a diagram for describing a hardware configuration of a master device;

FIG. 5 is a block diagram of functions of the global master device;

FIG. 6 is a block diagram of the master device;

FIG. 7 is a sequence chart for describing an outline of deployment destination cluster determination processing according to a first embodiment;

FIG. 8 is a flowchart for describing details of the deployment destination cluster determination processing in the first embodiment;

FIG. 9 is a flowchart for describing details of the deployment destination cluster determination processing in the first embodiment;

FIG. 10 is a flowchart for describing details of the deployment destination cluster determination processing in the first embodiment;

FIG. 11 is a diagram for describing a specific example of a deployment request;

FIG. 12 is a diagram for describing a specific example of cluster information;

FIGs. 13A, 13B, and 13C are a diagram for describing a specific example of resource information;

FIG. 14 is a diagram for describing a specific example of weight information;

FIG. 15 is a sequence chart for describing an outline of deployment destination cluster determination processing according to a second embodiment;

FIG. 16 is a flowchart for describing details of the deployment destination cluster determination processing in the second embodiment;

FIG. 17 is a flowchart for describing details of the deployment destination cluster determination processing in the second embodiment; and

FIG. 18 is a flowchart for describing details of the deployment destination cluster determination processing in the second embodiment.

[ADVANTAGEOUS EFFECTS OF INVENTION]

In one aspect, it is possible to determine the cluster capable of deploying a container according to a resource state of each cluster at the time of deployment.

DESCRIPTION OF EMBODIMENTS

[Configuration of Information Processing System]

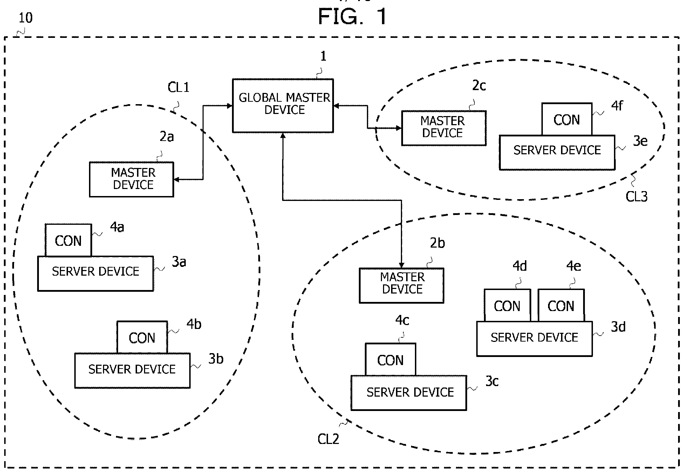

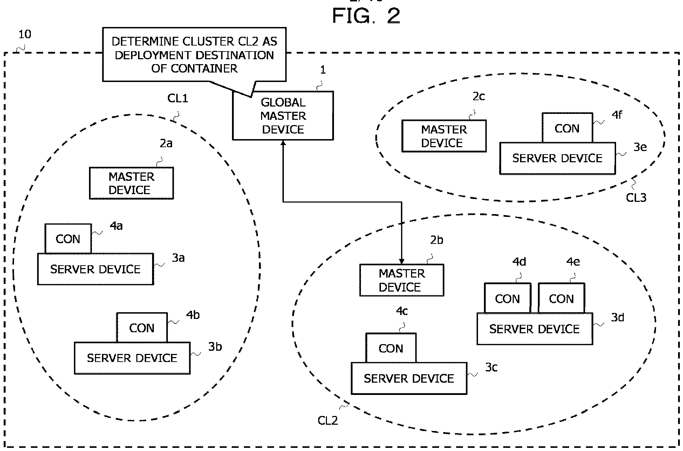

First, a configuration of an information processing system 10 (hereinafter also referred to as a container deployment destination cluster determination system 10) will be described. FIGs. 1 and 2 are diagrams for describing a configuration of the information processing system 10.

The information processing system 10 illustrated in FIG. 1 includes a global master device 1, master devices 2a, 2b, and 2c (hereinafter collectively and simply referred to as master device(s) 2), and server devices 3a, 3b, 3c, 3d, and 3e (hereinafter collectively and simply referred to as server device(s) 3). Each of the global master device 1, the master device 2, and the server device 3 may be, for example, a physical machine or a virtual machine. Furthermore, each of the server devices 3 may be, for example, a router device, a camera device, or the like.

Then, in the example illustrated in FIG. 1, the master device 2a, the server device 3a, and the server device 3b form a cluster CL1, the master device 2b, the server device 3c, and the server device 3d form a cluster CL2, and the master device 2c and the server device 3e form a cluster CL3.

Moreover, in the example illustrated in FIG. 1, a container (hereinafter also referred to as CON) 4a is operating in the server device 3a, a container 4b is operating in the server device 3b, and a container 4c is operating in the server device 3c. Further, in the example illustrated in FIG. 1, a container 4d and a container 4e are operating in the server device 3d, and a container 4f is operating in the server device 3e. Each of the containers 4a, 4b, 4c, 4d, and 4e (hereinafter collectively and simply referred to as container(s) 4) may be, for example, a container having a network function (cloud-native network function (CNF)) such as a core function and a firewall function of a local 5G.

Hereinafter, a case in which the information processing system 10 includes the three master devices 2 and the five server devices 3, and these master devices 2 and server devices 3 form the three clusters will be described. However, the information processing system 10 may include other numbers of master devices 2 and server devices 3, and these master devices 2 and server devices 3 may form clusters of a number other than three.

Furthermore, the cluster CL1, the cluster CL2, and the cluster CL3 each may be a cluster configured by the server device 3 used for providing cloud services by different cloud operators, and may be, for example, physically separated from one another. That is, for example, the global master device 1 may cross-sectionally manage the respective containers 4 (respective containers 4 in a multi-cloud environment) respectively deployed in the server devices 3 used for providing a plurality of cloud services from the viewpoint of, for example, ensuring redundancy.

Moreover, each of the server devices 3 configuring each cluster CL may be, for example, a server device deployed in a data center (not illustrated) or may be a server device deployed in a business office, a store, or the like of a cloud service user.

In the example illustrated in FIG. 1, when an administrator receives a deployment request of a container 4 transmitted via an administrator terminal (not illustrated), the global master device 1 deploys the container 4 corresponding to the deployment request (hereinafter also referred to as a container 4 to be deployed) to one of the server devices 3, for example.

Specifically, the global master device 1 collects information indicating a resource state of each of the server devices 3 in the clusters CL1, CL2, and CL3 (hereinafter collectively and simply referred to as cluster(s) CL) from each of the master devices 2a, 2b, and 2c, for example. Then, the global master device 1 determines the cluster CL capable of deploying the container 4 to be deployed from among the clusters CL1, CL2, and CL3 by using the information collected from each of the master devices 2, for example. Thereafter, the global master device 1 transmits the deployment instruction of the container 4 to be deployed to the master device 2 of the determined cluster CL.

However, for example, in a case where the number of server devices 3 that need to be managed in an integrated manner is large, the global master device 1 takes an enormous amount of time to determine the cluster CL capable of deploying the container 4 to be deployed. Therefore, in this case, the global master device 1 is not able to efficiently deploy the container 4 to be deployed.

Therefore, in the case of receiving the deployment request of the container 4, the global master device 1 instructs the master device 2 configuring the cluster CL specified in advance by the administrator to deploy the container 4 to be deployed.

Specifically, for example, in a case where the cluster CL specified in advance by the administrator is the cluster CL2, the global master device 1 instructs the master device 2b configuring the cluster CL2 to deploy the container 4 to be deployed, as illustrated in FIG. 2. Then, the master device 2b deploys the container 4 to be deployed in either the server device 3c or the server device 3d configuring the cluster CL2.

However, in a case where a server device 3 capable of deploying the container 4 to be deployed is not present in the server devices 3 configuring the cluster CL2, for example, the global master device 1 needs to instruct the master device 2 (the master device 2a or the master device 2c) of another cluster CL to deploy the container 4 to be deployed again and is not able to efficiently deploy the container 4 to be deployed.

Therefore, the global master device 1 in the present embodiment transmits a resource condition needed for deployment of the container 4 corresponding to the deployment request to each of the master devices 2.

Then, each of the master devices 2 determines whether the resources in the cluster CL in which each master device 2 is deployed satisfy the resource condition received from the global master device 1. Moreover, each of the master devices 2 transmits a result of the determination to the global master device 1.

Thereafter, the global master device 1 determines the cluster CL to be a deployment destination of the container 4 to be deployed (hereinafter also referred to as a deployment destination cluster CL) on the basis of the results of the determination received from the respective master devices 2.

That is, the global master device 1 acquires the result of the determination, which is information corresponding to the resource state in each cluster CL, from all the master devices 2 before deploying the container 4 to be deployed, for example.

Therefore, the global master device 1 can determine the cluster CL capable of deploying the container 4 to be deployed according to the resource state of each cluster CL at the time of deployment (the resource state indicated by the result of the determination acquired from each master device 2). Therefore, the global master device 1 can suppress occurrence of redeployment in other clusters CL by deploying the container 4 to be deployed in the cluster CL determined according to the resource state of each cluster CL. Therefore, the global master device 1 can efficiently deploy the container 4 to be deployed.

[Hardware Configuration of Information Processing System]

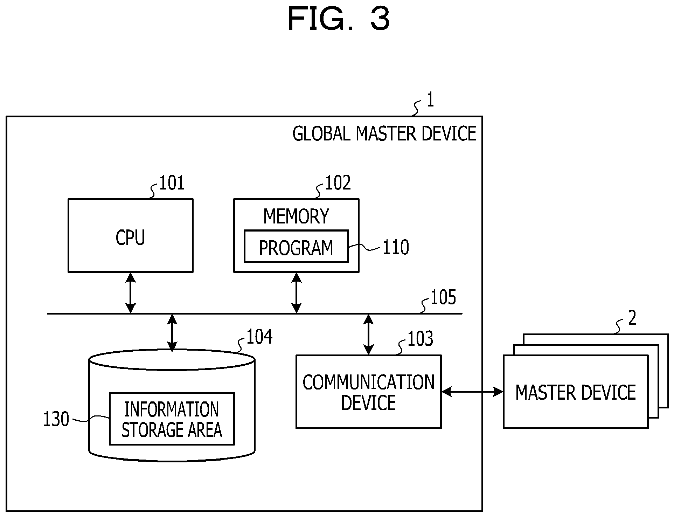

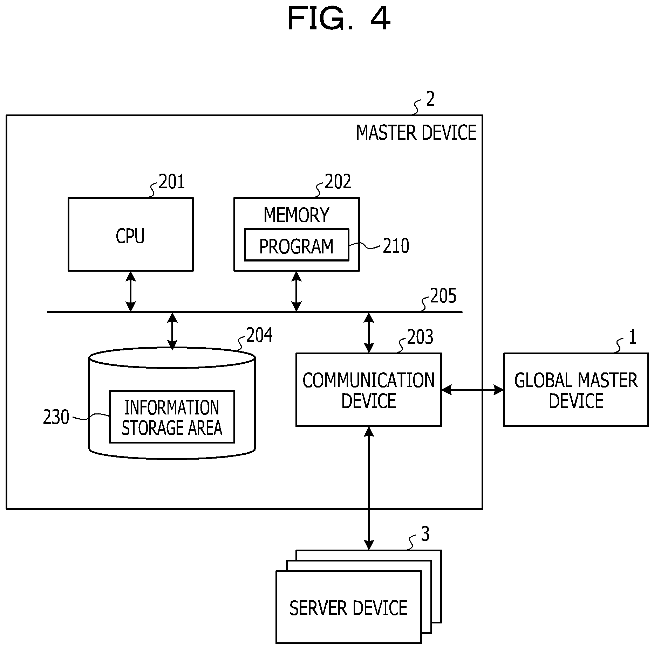

Next, a hardware configuration of the information processing system 10 will be described. FIG. 3 is a diagram for describing a hardware configuration of the global master device 1. Furthermore, FIG. 4 is a diagram for describing a hardware configuration of the master device 2.

First, a hardware configuration of the global master device 1 will be described.

As illustrated in FIG. 3, the global master device 1 includes a central processing unit (CPU) 101 as a processor, a memory 102, a communication device 103, and a storage medium 104. Each of the units is connected with one another via a bus 105.

The storage medium 104 is, for example, a program storage area (not illustrated) for storing a program 110 for performing processing of determining a cluster CL to be the deployment destination of the container 4 to be deployed (hereinafter also referred to as deployment destination cluster determination processing). Furthermore, the storage medium 104 has, for example, an information storage area 130 for storing information to be used when the deployment destination cluster determination processing is performed. Note that the storage medium 104 may be, for example, a hard disk drive (HDD) or a solid state drive (SSD).

The CPU 101 executes the program 110 loaded from the storage medium 104 into the memory 102 to perform the deployment destination cluster determination processing.

Furthermore, the communication device 103 communicates with the master device 2 via a network (not illustrated), for example.

Next, a hardware configuration of the master device 2 will be described.

As illustrated in FIG. 4, the master device 2 includes a CPU 201 that serves as a processor, a memory 202, a communication device 203, and a storage medium 204. Each of the units is connected with one another via a bus 205.

The storage medium 204 has, for example, a program storage area (not illustrated) that stores a program 210 for performing the deployment destination cluster determination processing. Furthermore, the storage medium 204 has, for example, an information storage area 230 for storing information to be used when the deployment destination cluster determination processing is performed. Note that the storage medium 204 may be, for example, an HDD or an SSD.

The CPU 201 executes the program 210 loaded from the storage medium 204 into the memory 202 to perform the deployment destination cluster determination processing.

Furthermore, the communication device 203 communicates with the global master device 1 and the server device 3 via a network (not illustrated), for example.

[Functions of Information Processing System]

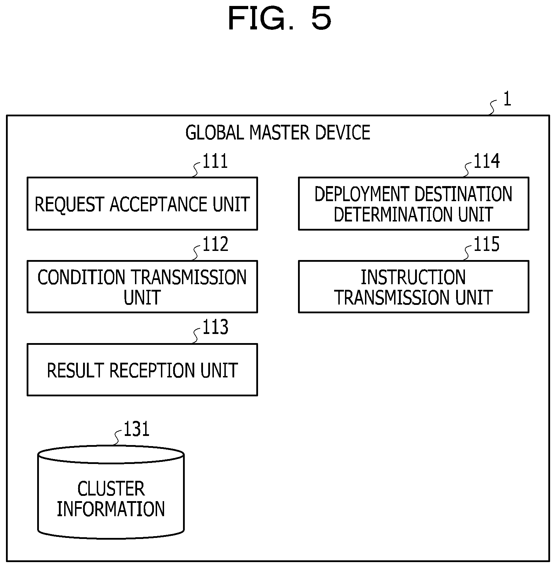

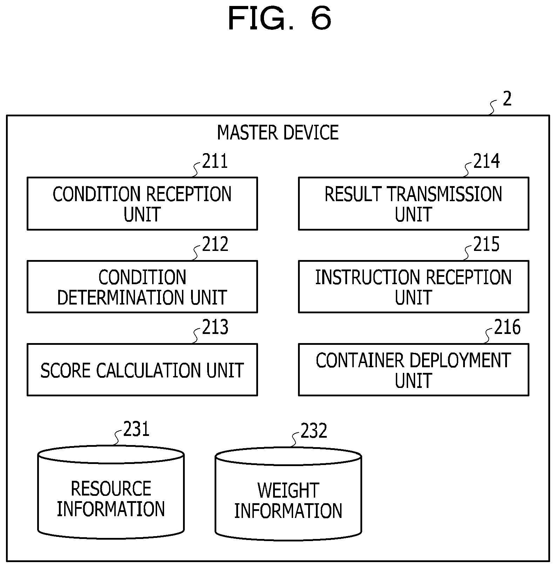

Next, the functions of the information processing system 10 will be described. FIG. 5 is a block diagram of functions of the global master device 1. Furthermore, FIG. 6 is a block diagram of the master device 2.

First, a block diagram of functions of the global master device 1 will be described.

As illustrated in FIG. 5, for example, the global master device 1 implements various functions including a request acceptance unit 111, a condition transmission unit 112, a result reception unit 113, a deployment destination determination unit 114, and an instruction transmission unit 115 when the hardware such as the CPU 101, the memory 102, and the like organically cooperates with the program 110.

Furthermore, the global master device 1 stores cluster information 131 in an information storage area 130, for example, as illustrated in FIG. 5.

For example, the request acceptance unit 111 receives the deployment request of the container 4 transmitted by the administrator via the administrator terminal (not illustrated).

The condition transmission unit 112 transmits the resource condition needed for the deployment of the container 4 to be deployed to each of the master devices 2. The resource condition is, for example, information included in the deployment request received by the request acceptance unit 111, and is information including the number of cores and a memory amount of the CPU used by the container 4 to be deployed.

The result reception unit 113 receives the result of the determination as to whether free resources in the cluster CL in which each master device 2 is deployed (for example, free resources of the CPU and the memory) satisfy the resource condition transmitted by the condition transmission unit 112 from each of the master devices 2.

The deployment destination determination unit 114 determines the cluster CL to deploy the container 4 to be deployed on the basis of the results of the determination received by the result reception unit 113 from the respective master devices 2.

The instruction transmission unit 115 transmits the deployment instruction of the container 4 to be deployed to the master device 2 of the determined cluster CL determined by the deployment destination determination unit 114. The cluster information 131 will be described later.

Next, a block diagram of functions of the master device 2 will be described.

As illustrated in FIG. 6, the master device 2 implements various functions including a condition reception unit 211, a condition determination unit 212, a score calculation unit 213, a result transmission unit 214, an instruction reception unit 215, and a container deployment unit 216 when the hardware such as the CPU 201, the memory 202, and the like organically cooperates with the program 210, for example.

Furthermore, the master device 2 stores resource information 231 and weight information 232 in an information storage area 230, for example, as illustrated in FIG. 6.

The condition reception unit 211 receives the resource condition transmitted from the global master device 1.

The condition determination unit 212 determines whether the resources in the cluster CL in which its own master device 2 is deployed satisfy the resource condition received by the condition reception unit 211.

The score calculation unit 213 calculates a score indicating a use state of the resources in the cluster CL in which its own master device 2 is deployed on the basis of a use rate of the resources (the use rate of the CPU and the memory) in each server device 3 in the cluster CL in which its own master device 2 is deployed.

The result transmission unit 214 transmits the result of the determination performed by the condition determination unit 212 to the global master device 1. Furthermore, the result transmission unit 214 transmits the score calculated by the score calculation unit 213 to the global master device 1.

The instruction reception unit 215 receives the deployment instruction of the container 4 to be deployed transmitted from the global master device 1.

The container deployment unit 216 deploys the container 4 to be deployed to one of the server devices 3 in the cluster CL in which its own master device 2 is deployed in response to reception of the deployment instruction of the container 4 to be deployed by the instruction reception unit 215. The resource information 231 and the weight information 232 will be described later.

[Outline of First Embodiment]

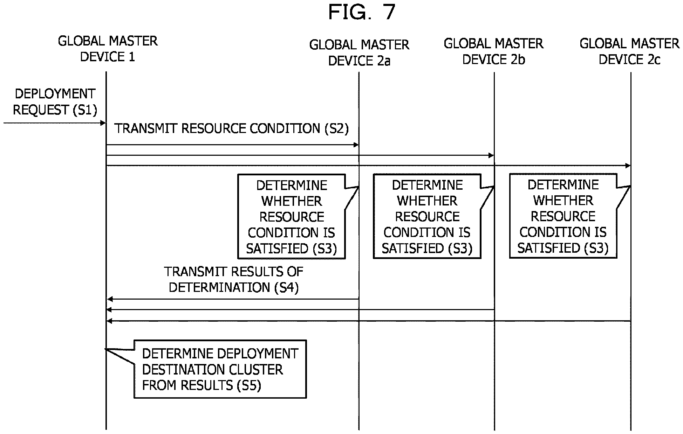

Next, an outline of a first embodiment will be described. FIG. 7 is a sequence chart for describing an outline of deployment destination cluster determination processing according to a first embodiment.

As illustrated in FIG. 7, for example, in the case where the global master device 1 receives the deployment request of the container 4 to be deployed from the administrator terminal (not illustrated) (S1), the global master device 1 transmits the resource condition needed for deployment of the container 4 to be deployed to each of the master devices 2 (the master device 2a, the master device 2b, and the master device 2c) (S2).

Then, each of the master devices 2 determines whether the resources in the cluster CL in which its own master device 2 is deployed satisfy the resource condition received from the global master device 1 in response to reception of the resource condition from the global master device 1 (S3). Moreover, each of the master devices 2 transmits the result of the determination in the processing of S3 to the global master device 1 (S4). Here, the result of the determination transmitted by each of the master devices 2 may be a character string such as YES/NO, or may be a flag for indicating YES/NO.

**[0062]** Thereafter, the global master device 1 determines the cluster CL to deploy the container 4 to be deployed on the basis of the results of the determination received from the respective master devices 2 (S5).

That is, the global master device 1 acquires the result of the determination, which is information corresponding to the resource state in each cluster CL, from all the master devices 2 before deploying the container 4 to be deployed, for example.

As a result, the global master device 1 can determine the cluster CL capable of deploying the container 4 to be deployed according to the resource state of each cluster CL at the time of deployment. Therefore, the global master device 1 can suppress occurrence of redeployment in other clusters CL by deploying the container 4 to be deployed in the cluster CL determined according to the resource state of each cluster CL. Therefore, the global master device 1 can efficiently deploy the container 4 to be deployed.

Note that the present embodiment has been described on the assumption that all the master devices 2 transmit the result of determination. However, only the master device 2 determined to satisfy the resource condition may transmit the result of determination. Thereby, the master device 2 determined not to satisfy the resource condition does not transmit the result of determination, and thus the influence on traffic can be reduced.

[Details of First Embodiment]

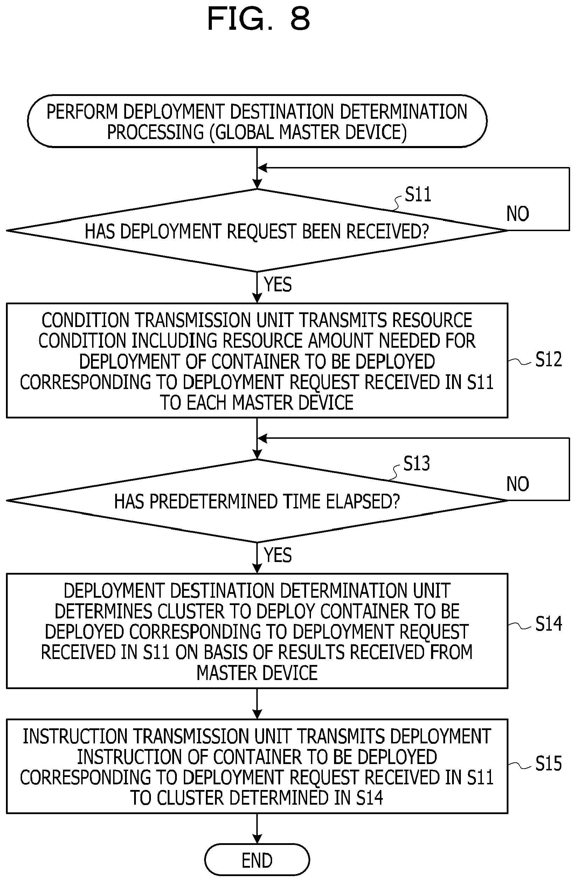

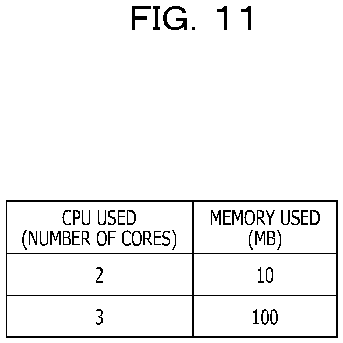

Next, the details of the first embodiment will be described. FIGs. 8 to 10 are flowcharts for describing details of deployment destination cluster determination processing in the first embodiment. Furthermore, FIGs. 11 to 15 are flowcharts for describing details of the deployment destination cluster determination processing in the first embodiment.

[Processing in Global Master Device (1)]

First, a part of processing in the global master device 1 will be described. FIG. 8 is a flowchart for describing processing in the global master device 1.

For example, the request acceptance unit 111 of the global master device 1 waits until receiving the deployment request transmitted from the administrator terminal (not illustrated) (NO in S11). Hereinafter, a specific example of the deployment request will be described.

[Specific Example of Deployment Request]

FIG. 11 is a diagram for describing a specific example of a deployment request DR.

The deployment request DR illustrated in FIG. 11 includes, as items, a "CPU used" in which the number of cores of the CPU used by the container 4 to be deployed is set and a "memory used" in which the amount of memory used by the container 4 to be deployed is set.

Specifically, in the first-row information in the information illustrated in FIG. 11, "2 (core)" is set as the "CPU used" and "10 (MB)" is set as the "memory used".

Furthermore, in the second-row information in the information illustrated in FIG. 11, "3 (core)" is set as the "CPU used" and "100 (MB)" is set as the "memory used".

That is, the deployment request DR illustrated in FIG. 11 is the deployment request requesting deployment of the container 4 with the CPU used of 2 (core) and the amount of memory used of 10 (MB) and the container 4 with the CPU used of 3 (core) and the amount of memory used of 100 (MB).

Returning to FIG. 8, in the case of receiving the deployment request transmitted from the administrator terminal (not illustrated) (YES in S11), the condition transmission unit 112 of the global master device 1 transmits the resource condition including the resource amount needed for deployment of the container 4 to be deployed corresponding to the deployment request received in the processing of S11 to each of the master devices 2 (S12).

Specifically, the condition transmission unit 112 refers to, for example, the cluster information 131 stored in the information storage area 130, and specifies the master device 2 in each cluster CL. Then, the condition transmission unit 112 transmits, for example, each information included in the deployment request DR described with reference to FIG. 11 to each of the specified master devices 2. Hereinafter, a specific example of the cluster information 131 will be described.

[Specific Example of Cluster Information]

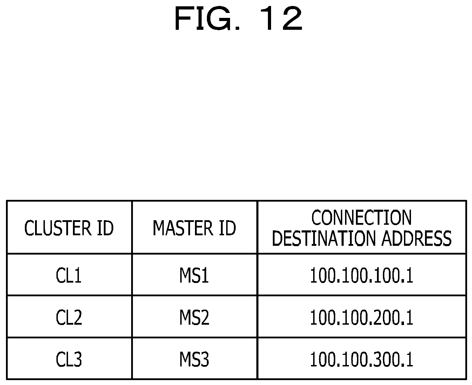

FIG. 12 is a diagram for describing a specific example of the cluster information 131.

The cluster information 131 illustrated in FIG. 12 includes, as items, a "cluster ID" that identifies each cluster CL, a "master ID" that identifies each master device 2, and a "connection destination address" in which an IP address of each master device 2 is set.

Specifically, in the first row of the cluster information 131 illustrated in FIG. 12, "CL1" is set as the "cluster ID", "MS1" is set as the "master ID", and "100.100.100.1" is set as the "connection destination address".

Furthermore, in the second row of the cluster information 131 illustrated in FIG. 12, "CL2" is set as the "cluster ID", "MS2" is set as the "master ID", and "100.100.200.1" is set as the "connection destination address".

Moreover, in the third row of the cluster information 131 illustrated in FIG. 12, "CL3" is set as the "cluster ID", "MS3" is set as the "master ID", and "100.100.300.1" is set as the "connection destination address".

Note that, hereinafter, description will be given on the assumption that the master devices 2 having the master IDs "MS1", "MS2" and "MS3" respectively correspond to each of the master device 2a, the master device 2b, and the master device 2c described in FIG. 1 and the like.

[Processing in Master Device (1)]

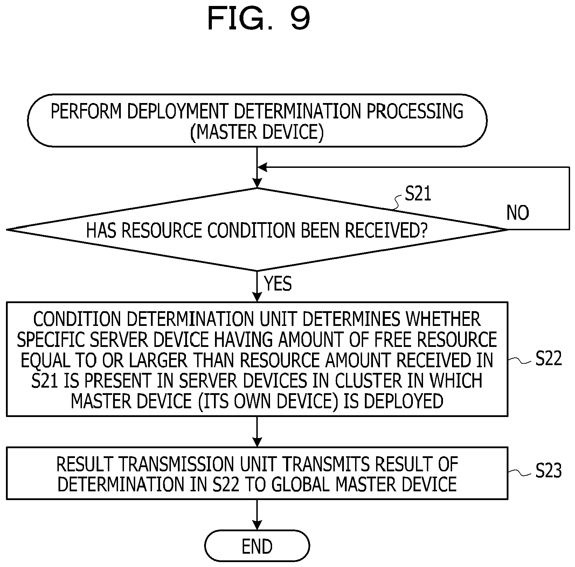

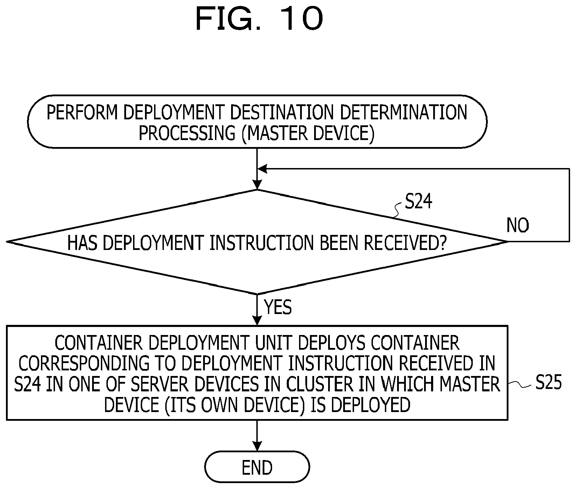

Next, a part of processing in the master device 2 will be described. FIGs. 9 and 10 are flowcharts for describing processing in the master device 2.

As illustrated in FIG. 9, the condition reception unit 211 of the master device 2 waits until receiving the resource condition from the global master device 1 (NO in S21). Note that the time needed for transmitting the resource condition from the global master device 1 to each master device 2 is, for example, about 10 (milliseconds).

Then, in the case of receiving the resource condition (YES in S21), the condition determination unit 212 of the master device 2 determines whether a specific server device 3 having the amount of free resources equal to or larger than the resource amount included in the resource condition received in the processing of S21 is present in the server devices 3 in the cluster CL in which its own master device 2 is deployed (S22).

For example, the condition determination unit 212 acquires, from each server device 3, the resource information 231 indicating the current amount of free resources of each server device 3 (amount of free resources of the CPU and the memory) in the cluster CL in which its own master device 2 is deployed. Then, the condition determination unit 212 refers to the resource information 231 acquired from each server device 3 and determines whether a specific server device 3 having the amount of free resources equal to or larger than the resource amount included in the resource condition received in the processing of S21 is present. Hereinafter, a specific example of the resource information 231 will be described.

[Specific Example of Resource Information]

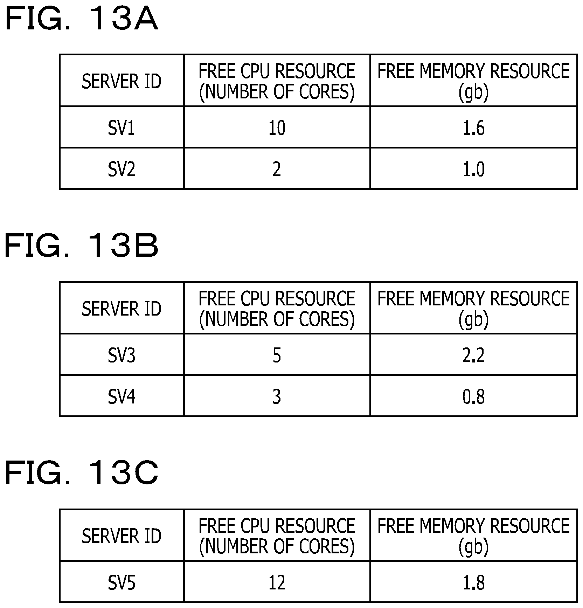

FIGs. 13A, 13B, and 13C are a diagram for describing a specific example of the resource information 231. Specifically, FIG. 13A is a diagram for describing a specific example of the resource information 231 (hereinafter also referred to as resource information 231a) acquired from the master device 2a. Furthermore, FIG. 13B is a diagram for describing a specific example of the resource information 231 (hereinafter also referred to as resource information 231b) acquired from the master device 2b. Moreover, FIG. 13C is a diagram for describing a specific example of the resource information 231 (hereinafter also referred to as resource information 231c) acquired from the master device 2c.

Each resource information 231 illustrated in FIG. 13 includes, as items, a "server ID" for identifying each server device 3, a "free CPU resource" in which the amount of free CPU resource is set, and a "free memory resource" in which the amount of free memory resource is set.

Specifically, in the first-row information in the resource information 231a illustrated in FIG. 13A, "SV1" is set as the "server ID", "10 (core)" is set as the "free CPU resource", and "1.6 (GB)" is set as the "free memory resource".

Furthermore, in the second-row information in the resource information 231a illustrated in FIG. 13A, "SV2" is set as the "server ID", "2 (core)" is set as the "free CPU resource", and "1.0 (GB)" is set as the "free memory resource".

Furthermore, in the first-row information in the resource information 231b illustrated in FIG. 13B, "SV3" is set as the "server ID", "5 (core)" is set as the "free CPU resource", and "2.2 (GB)" is set as the "free memory resource".

Furthermore, in the second-row information in the resource information 231b illustrated in FIG. 13B, "SV4" is set as the "server ID", "3 (core)" is set as the "free CPU resource", and "0.8 (GB)" is set as the "free memory resource".

Moreover, in the first-row information in the resource information 231c illustrated in FIG. 13C, "SV5" is set as the "server ID", "12 (core)" is set as the "free CPU resource", and "1.8 (GB)" is set as the "free memory resource".

Note that, hereinafter, description will be given on the assumption that the server devices 3 having the server IDs "SV1", "SV2", "SV3", "SV4", and "SV5" respectively correspond to each of the server device 3a, the server device 3b, the server device 3c, the server device 3d, and the server device 3e described in FIG. 1 and the like.

Here, the deployment request DR illustrated in FIG. 11 includes information for requesting deployment of a container with the CPU used of 2 (core) and the amount of memory used of 10 (MB) (hereinafter referred to as a container A) and a container with the CPU used of 3 (core) and the amount of memory used of 100 (MB) (hereinafter referred to as a container B).

Therefore, in the processing of S21, for example, in the case of receiving the resource condition corresponding to the deployment request DR described with reference to FIG. 11, the condition determination unit 212 of the master device 2a specifies the server device 3a as the specific server device 3 capable of deploying the container A and moreover, specifies the server device 3b as the specific server device 3 capable of deploying the container B, for example.

Note that, in this case, the condition determination unit 212 of the master device 2a may specify the server device 3a as the specific server device 3 capable of deploying both the container A and the container B, for example.

Meanwhile, the total (5 (core)) of the CPU used by the container A and the CPU used by the container B is larger than 2 (core) that is the free CPU resource of the server device 3b. Therefore, in this case, the condition determination unit 212 of the master device 2a does not specify the server device 3b as the specific server device 3 capable of specifying both the container A and the container B.

Returning to FIG. 9, the result transmission unit 214 of the master device 2 transmits the result of the determination performed in the processing of S22 to the global master device 1 (S23).

[Processing in Global Master Device (2)]

Next, another part of the processing in the global master device 1 will be described.

For example, the result reception unit 113 of the global master device 1 waits until a predetermined time elapses after the processing of S12 is performed, as illustrated in FIG. 8 (NO in S13).

That is, the result of the determination transmitted from the master device 2 may be transmitted with a significant delay depending on a network congestion or the like. Therefore, for example, the global master device 1 may determine the cluster CL to deploy the container 4 to be deployed on the basis of only the result of the determination from the master device 2 before a predetermined time elapses from the transmission of the resource condition to each master device 2.

As a result, the global master device 1 becomes able to determine the cluster CL as the deployment destination without waiting for reception of the determination results from all the master devices and can promptly determine the deployment destination of the container 4 to be deployed.

Note that the time from the transmission of the resource condition in the processing of S12 to the reception of the result of the determination transmitted by each master device 2 is, for example, about 100 (seconds).

Then, in the case where the predetermined time has elapsed since the processing of S12 (YES in S13), the deployment destination determination unit 114 of the global master device 1 determines the cluster CL to deploy the container 4 to be deployed corresponding to the deployment request received in the processing of S11 on the basis of the result of the determination from the master device 2 (the result of the determination received before the predetermined time elapses from when the processing of S12 is performed) (S14).

Specifically, the deployment destination determination unit 114 specifies the master device 2 that has transmitted the result indicating that the specific server device 3 having the amount of free resources equal to or larger than the resource amount included in the resource condition transmitted in the processing of S12 is present. Then, the deployment destination determination unit 114 determines the cluster CL in which the specified master device 2 is deployed as the cluster CL to deploy the container 4 to be deployed corresponding to the deployment request received in the processing of S11, for example.

Note that the deployment destination determination unit 114 may, for example, specify the master device 2 that has first transmitted the result indicating that the specific server device 3 having the amount of free resources equal to or larger than the resource amount included in the resource condition transmitted in the processing of S12 is present, and determine the cluster CL in which the specified master device 2 is deployed as the cluster CL to deploy the container 4 to be deployed corresponding to the deployment request received in the processing of S11.

After that, the instruction transmission unit 115 of the global master device 1 transmits the deployment instruction of the container 4 to be deployed corresponding to the deployment request received in the processing of S11 to the cluster CL determined in the processing of S14 (S15).

[Processing in Master Device (2)]

Next, another part of the processing in the master device 2 will be described.

As illustrated in FIG. 10, the instruction reception unit 215 of the master device 2 waits until receiving the deployment instruction of the container 4 transmitted from the global master device 1 (NO in S24).

Then, in the case of receiving the deployment instruction of the container 4 (YES in S24), the container deployment unit 216 of the master device 2 deploys the container 4 corresponding to the deployment instruction received in the processing of S24 to one of the server devices 3 in the cluster CL in which its own master device 2 is deployed (S25).

Specifically, the container deployment unit 216 calculates, for example, one or more priorities of each of the server devices 3, for each of the server devices 3 determined to be present in the processing of S22. The one or more priorities may include, for example, a priority (hereinafter also referred to as priority A) having a higher value as the amount of free resources of the CPU and the memory is larger, and a priority (also referred to as priority B) having a higher value as the balance of the amounts of use (use rate) of the CPU and the memory is better. Then, the container deployment unit 216 refers to, for example, the weight information 232 stored in the information storage area 130, and calculates a sum of products of each priority and a weighting factor corresponding to each priority. Thereafter, the container deployment unit 216 deploys the container 4 corresponding to the deployment instruction received in the processing of S24 in the server device 3 having the largest calculated sum, for example. Hereinafter, a specific example of the weight information 232 will be described.

[Specific Example of Weight Information]

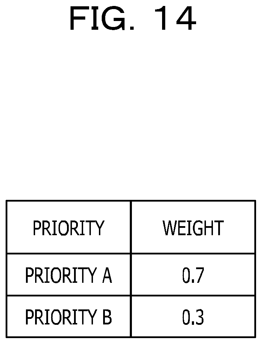

FIG. 14 is a diagram for describing a specific example of the weight information 232.

The weight information 232 illustrated in FIG. 14 has "priority" for identifying each priority and "weight" for which a weighting factor corresponding to each priority is set as items.

Specifically, in the first-row information in the weight information 232 illustrated in FIG. 14, "priority A" is set as the "priority" and "0.7" is set as the "weight".

Furthermore, in the second-row information in the weight information 232 illustrated in FIG. 14, "priority B" is set as the "priority" and "0.3" is set as the "weight".

Note that the value set in the "weight" in the weight information 232 may be, for example, a value preset by the administrator.

As described above, the global master device 1 in the present embodiment transmits the resource condition needed for deployment of the container 4 corresponding to the deployment request to each of the master devices 2.

Then, each of the master devices 2 determines whether the resources in the cluster CL in which each master device 2 is deployed satisfy the resource condition received from the global master device 1. Moreover, each of the master devices 2 transmits a result of the determination to the global master device 1.

Thereafter, the global master device 1 determines the cluster CL as the deployment destination of the container 4 to be deployed on the basis of the results of the determination received from the respective master devices 2.

That is, the global master device 1 acquires the result of the determination, which is the information corresponding to the resource state in each cluster CL, from each master device 2 before deploying the container 4 to be deployed.

As a result, the global master device 1 can determine the cluster CL capable of deploying the container 4 to be deployed according to the resource state of each cluster CL at the time of deployment. Therefore, the global master device 1 can suppress occurrence of redeployment in other clusters CL by deploying the container 4 to be deployed in the cluster CL determined according to the resource state of each cluster CL. Therefore, the global master device 1 can efficiently deploy the container 4 to be deployed.

[Outline of Second Embodiment]

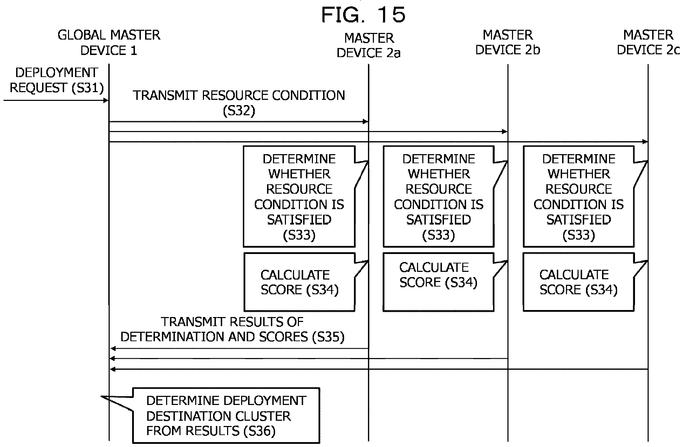

Next, an outline of a second embodiment will be described. FIG. 15 is a sequence chart for describing an outline of deployment destination cluster determination processing according to a second embodiment.

As illustrated in FIG. 15, for example, in a case where a global master device 1 receives a deployment request of a container 4 to be deployed from an administrator terminal (not illustrated) (S31), the global master device 1 transmits a resource condition needed for deployment of the container 4 to be deployed to each of master devices 2 (the master device 2a, the master device 2b, and the master device 2c) (S32).

Then, each of the master devices 2 determines whether resources in a cluster CL in which its own master device 2 is deployed satisfy the resource condition received from the global master device 1 in response to reception of the resource condition from the global master device 1 (S33). Furthermore, each of the master devices 2 calculates a score indicating a use state of the resources in the cluster CL in which its own master device 2 is deployed on the basis of a use rate of the resources in each server device 3 in the cluster CL in which its own master device 2 is deployed (S34). Moreover, each of the master devices 2 transmits the result of the determination in the processing of S33 and the score calculated in the processing of S34 to the global master device 1 (S35).

Thereafter, the global master device 1 determines the cluster CL to deploy the container 4 to be deployed on the basis of the results of the determination and the scores received from the respective master devices 2 (S36).

That is, each of the master devices 2 in the second embodiment determines whether the resources in the cluster CL in which its own master device 2 is deployed satisfy the resource condition, and in addition, calculates the score indicating the use state of the resources in the cluster CL in which its own master device 2 is deployed. Then, the global master device 1 in the second embodiment determines the cluster CL in which the container 4 to be deployed is to be deployed by referring to the score transmitted from each master device 2 in addition to the result of the determination transmitted from each master device 2.

As a result, the global master device 1 can deploy the container 4 to be deployed in a more appropriate cluster CL.

[Details of Second Embodiment]

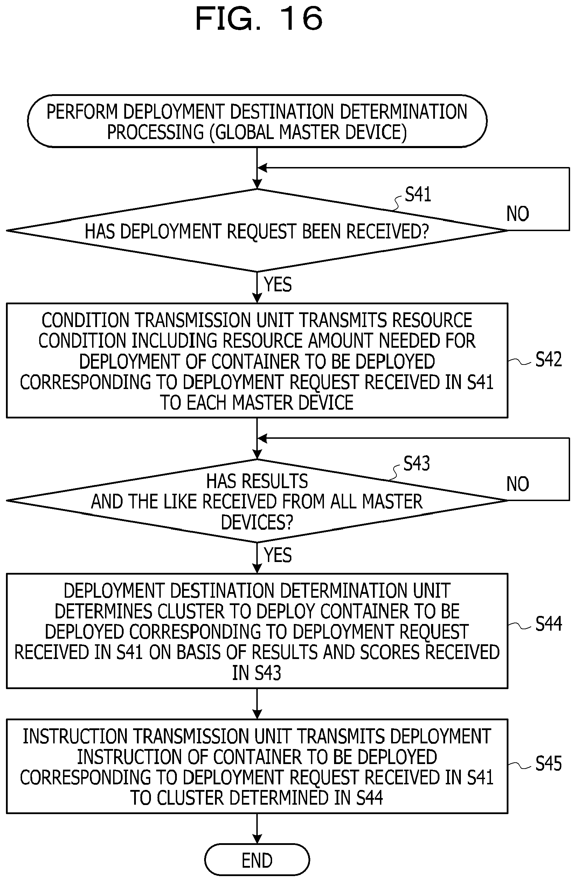

Next, details of the second embodiment will be described. FIGs. 16 to 18 are flowcharts for describing details of deployment destination cluster determination processing in the second embodiment.

[Processing in Global Master Device (1)]

First, a part of processing in the global master device 1 will be described. FIG. 16 is a flowchart for describing processing in the global master device 1.

For example, the request acceptance unit 111 of the global master device 1 waits until receiving the deployment request transmitted from an administrator terminal (not illustrated) (NO in S41).

Then, in the case of receiving the deployment request transmitted from the administrator terminal (YES in S41), the condition transmission unit 112 of the global master device 1 transmits the resource condition including the resource amount needed for deployment of the container 4 to be deployed corresponding to the deployment request received in the processing of S41 to each of the master devices 2 (S42).

[Processing in Master Device (1)]

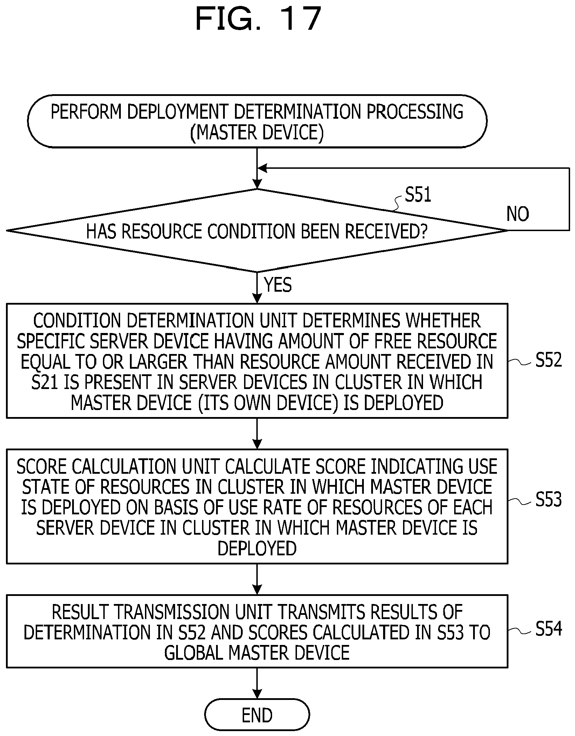

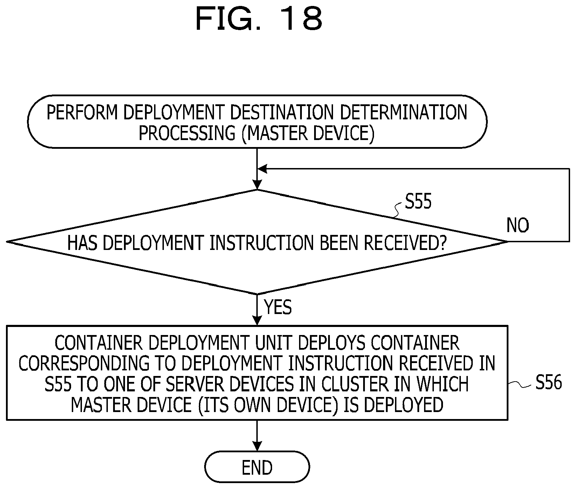

Next, a part of processing in the master device 2 will be described. FIGs. 17 and 18 are flowcharts for describing processing in the master device 2.

As illustrated in FIG. 17, the condition reception unit 211 of the master device 2 waits until receiving the resource condition from the global master device 1 (NO in S51).

Then, in the case of receiving the resource condition (YES in S51), the condition determination unit 212 of the master device 2 determines whether a specific server device 3 having the amount of free resources equal to or larger than the resource amount included in the resource condition received in the processing of S51 is present in the server devices 3 in the cluster CL in which its own master device 2 is deployed (S52).

Furthermore, in this case, the score calculation unit 213 of the master device 2 calculates a score indicating a use state of the resources in the cluster CL in which its own master device 2 is deployed on the basis of a use rate of the resources in each server device 3 in the cluster CL in which its own master device 2 is deployed (S53).

Specifically, the score calculation unit 213 calculates the score by using, for example, at least one of an average value and a variance value of the resources of each of the server devices 3 in the cluster CL in which its own master device 2 is deployed.

More specifically, the score calculation unit 213 calculates the score by using, for example, the following expression (1).

$$\text{The score} = 1/(A \times \text{the average value of the CPU use rates in each}$$
$$\text{server device } 3 + B \times \text{the variance value of the CPU use rates in each server}$$
$$\text{device } 3) + 1/(C \times \text{the average value of the memory use rates in each server}$$
$$\text{device } 3 + D \times \text{the variance value of the memory use rates in each server device}$$
$$3) + 1/(E \times \text{the average value of the storage medium use rates in each server}$$
$$\text{device } 3 + F \times \text{the variance value of the storage medium use rates in each server}$$
$$\text{device } 3)... \quad (\text{Expression } 1)$$

Note that each of A, B, C, D, E and F in the expression (1) is, for example, a weighting factor predetermined by the administrator. Furthermore, the score calculation unit 213 may adopt only one of the first term, second term, and third term as the score, or may adopt the sum of any two of the first term, second term, and third term as the score. Furthermore, in the expression (1), an example of using both the average values and the variance values of the respective indexes has been described. However, only one of the average values and the variance values of the respective indexes may be used.

That is, in the processing of S53, the score calculation unit 213 may calculate the score so as to increase the score of the cluster CL having a small average value of the resources of each of the server devices 3 in the cluster CL in which its own master device 2 is deployed. Furthermore, in the processing of S53, the score calculation unit 213 may calculate the score so as to increase the score of the cluster CL having a small variance value of the resources of each of the server devices 3 in the cluster CL in which its own master device 2 is deployed.

Returning to FIG. 17, the result transmission unit 214 of the master device 2 transmits the result of the determination performed in the processing of S52 and the score calculated in the processing of S53 to the global master device 1 (S54).

[Processing in Global Master Device (2)]

Next, another part of the processing in the global master device 1 will be described.

As illustrated in FIG. 16, the result reception unit 113 of the global master device 1 waits until receiving the results of the determination and the scores from all the master devices 2 to which the resource condition has been transmitted in the processing in S42 (NO in S43).

Then, in the case of receiving the results of determination and the scores from all the master devices 2 (YES in S43), the deployment destination determination unit 114 of the global master device 1 determines the cluster CL to deploy the container 4 to be deployed corresponding to the deployment request received in the processing of S41 on the basis of the results of determination and the scores received in the processing of S43 (S44).

Specifically, the deployment destination determination unit 114 specifies the master device 2 that has transmitted the result indicating that the specific server device 3 having the amount of free resources equal to or larger than the resource amount included in the resource condition transmitted in the processing of S42 is present. Then, the deployment destination determination unit 114 determines the cluster CL having the highest score in the clusters CL in which the specified master device 2 is deployed as the cluster CL to deploy the container 4 to be deployed corresponding to the deployment request received in the processing of S41, for example.

After that, the instruction transmission unit 115 of the global master device 1 transmits the deployment instruction of the container 4 to be deployed corresponding to the deployment request received in the processing of S41 to the cluster CL determined in the processing of S44 (S45).

[Processing in Master Device (2)]

Next, another part of the processing in the master device 2 will be described.

As illustrated in FIG. 18, the instruction reception unit 215 of the master device 2 waits until receiving the deployment instruction transmitted from the global master device 1 (NO in S55).

Then, in the case of receiving the deployment instruction (YES in S55), the container deployment unit 216 of the master device 2 deploys the container 4 corresponding to the deployment instruction received in the processing of S55 to one of the server devices 3 in the cluster CL in which its own master device 2 is deployed (S56).

That is, each of the master devices 2 in the second embodiment determines whether the resources in the cluster CL in which its own master device 2 is deployed satisfy the resource condition, and in addition, calculates the score indicating the use state of the resources in the cluster CL in which its own master device 2 is deployed. Then, the global master device 1 in the second embodiment determines the cluster CL in which the container 4 to be deployed is to be deployed by referring to the score transmitted from each master device 2 in addition to the result of the determination transmitted from each master device 2.

As a result, the global master device 1 can deploy the container 4 to be deployed in a more appropriate cluster CL. Specifically, the global master device 1 can perform control to preferentially deploy the container 4 in the cluster CL including the server device 3 with a low resource use rate, by using the score obtained in consideration of the average values of the respective indexes. Furthermore, the global master device 1 can perform control to preferentially deploy the container 4 in the cluster CL including the server device 3 with a small variation in the resource use rate, by using the score obtained in consideration of the variance values of the respective indexes.

**Claims**

1. A container deployment control method executed by a system that includes a global master device and a plurality of master devices, the method comprising:

   transmitting, by the global master device, a resource condition needed for deployment of a container to be deployed to each of the plurality of master devices;
   identifying, by each of the plurality of master devices, a result which indicates whether a resource in a cluster in which each of the plurality of master devices is deployed satisfies the resource condition;
   transmitting, by each of the plurality of master devices, the result to the global master device; and
   specifying, by the global master device, a cluster to be a deployment destination of the container to be deployed by using the result.

2. The container deployment control method according to claim 1, wherein the transmitting by each of the plurality of master devices includes
   transmitting the result of the determination to the global master device in a case of determining that the resource in the cluster in which each of the master devices is deployed satisfies the resource condition.

3. The container deployment control method according to claim 1, wherein
   the transmitting by the global master device includes transmitting a resource amount needed for deployment of the container to be deployed as the resource condition to each of the master devices,
   the identifying includes determining whether a specific node that has an amount of free resources equal to or larger than the resource amount is present among nodes in the cluster in which each of the master devices is deployed, and
   the transmitting by each of the plurality of master devices includes transmitting information that indicates whether the specific node is present as the result to the global master device.

4. The container deployment control method according to claim 1, wherein the method comprising:
   determining, by the global master device, as the cluster to be the deployment destination, a cluster in which the master device is deployed, that has transmitted the result that indicates that the resource in the cluster satisfies the resource condition.

5. The container deployment control method according to claim 1, wherein the method comprising:

   transmitting, by the global master device, a deployment instruction of the container to be deployed to the cluster to be a deployment destination,
   receiving, by the master device, the deployment instruction, and

deploying, by the master device, the container to be deployed.

6. The container deployment control method according to claim 1, wherein the method comprising:
determining, by the global master device, as the cluster to be a deployment destination, a cluster in which the master device is deployed, that has transmitted the result that indicates that the resource in the cluster satisfies the resource condition, and is a transmission source of the result received before a predetermined time elapses from transmission of the resource condition.

7. The container deployment control method according to claim 1, wherein the method comprising:

calculating, by each of the plurality of master devices, a score that indicates a use state of resources of the cluster in which each of the master devices is deployed on a basis of a use rate of a resource in each node in the cluster in which the master device is deployed, and
transmitting, by each of the plurality of master devices, the calculated score to the global master device, and determining, by the global master device, the cluster as a deployment destination of the container to be deployed on a basis of the result and the score received from each of the master devices.

8. The container deployment control method according to claim 7, wherein the method comprising:
calculating, by each of the plurality of master devices, the score by using at least one of an average value or a variance value of the resources of each node in the cluster.

9. The container deployment control method according to claim 7, wherein the method comprising:
determining, by the global master device, as the cluster to be a deployment destination, a cluster in which the master device that has the highest score is deployed, in the master devices that have transmitted the result that indicates that the resource in the cluster satisfies the resource condition.

10. The container deployment control method according to claim 9, wherein the method comprising:
determining, by the global master device, as the cluster to be a deployment destination, a cluster in which the master device is deployed, that has transmitted the result that indicates that the resource in the cluster satisfies the resource condition, and has the highest score in the master devices that are transmission sources of the results received before a predetermined time elapses from transmission of the resource condition.

11. A global master device comprising:

a transmission unit configured to transmit a resource condition needed for deployment of a container to be deployed to each of a plurality of master devices; and
a specific unit configured to specify a cluster to be a deployment destination of the container to be deployed by using a result which indicates whether a resource in a cluster in which each of the plurality of master devices is deployed satisfies the resource condition.

12. A master device comprising:

an identification unit configured to identify a result which indicates whether a resource in a cluster in which each of a plurality of master devices is deployed satisfies a resource condition needed for deployment of a container; and
a transmission unit configured to transmit the result to a global master device.

FIG. 1

## FIG. 2

# FIG. 3

# FIG. 4

MASTER DEVICE 2

201
CPU

202
MEMORY
PROGRAM 210

205

204
230 INFORMATION STORAGE AREA

203
COMMUNICATION DEVICE

1
GLOBAL MASTER DEVICE

3
SERVER DEVICE

# FIG. 5

GLOBAL MASTER DEVICE ⌇1

REQUEST ACCEPTANCE UNIT ⌇111

CONDITION TRANSMISSION UNIT ⌇112

RESULT RECEPTION UNIT ⌇113

DEPLOYMENT DESTINATION DETERMINATION UNIT ⌇114

INSTRUCTION TRANSMISSION UNIT ⌇115

CLUSTER INFORMATION ⌇131

# FIG. 6

MASTER DEVICE

211
CONDITION RECEPTION UNIT

214
RESULT TRANSMISSION UNIT

212
CONDITION DETERMINATION UNIT

215
INSTRUCTION RECEPTION UNIT

213
SCORE CALCULATION UNIT

216
CONTAINER DEPLOYMENT UNIT

2

231
RESOURCE INFORMATION

232
WEIGHT INFORMATION

## FIG. 7

GLOBAL MASTER
DEVICE 1

GLOBAL MASTER
DEVICE 2a

GLOBAL MASTER
DEVICE 2b

GLOBAL MASTER
DEVICE 2c

DEPLOYMENT
REQUEST (S1)

TRANSMIT RESOURCE CONDITION (S2)

DETERMINE
WHETHER
RESOURCE
CONDITION IS
SATISFIED (S3)

DETERMINE
WHETHER
RESOURCE
CONDITION IS
SATISFIED (S3)

DETERMINE
WHETHER
RESOURCE
CONDITION IS
SATISFIED (S3)

TRANSMIT RESULTS OF
DETERMINATION (S4)

DETERMINE DEPLOYMENT
DESTINATION CLUSTER
FROM RESULTS (S5)

# FIG. 8

PERFORM DEPLOYMENT DESTINATION DETERMINATION
PROCESSING (GLOBAL MASTER DEVICE)

S11
HAS DEPLOYMENT REQUEST BEEN RECEIVED? — NO

YES

CONDITION TRANSMISSION UNIT TRANSMITS RESOURCE
CONDITION INCLUDING RESOURCE AMOUNT NEEDED FOR
DEPLOYMENT OF CONTAINER TO BE DEPLOYED
CORRESPONDING TO DEPLOYMENT REQUEST RECEIVED IN S11
TO EACH MASTER DEVICE — S12

S13
HAS PREDETERMINED TIME ELAPSED? — NO

YES

DEPLOYMENT DESTINATION DETERMINATION UNIT
DETERMINES CLUSTER TO DEPLOY CONTAINER TO BE
DEPLOYED CORRESPONDING TO DEPLOYMENT REQUEST
RECEIVED IN S11 ON BASIS OF RESULTS RECEIVED FROM
MASTER DEVICE — S14

INSTRUCTION TRANSMISSION UNIT TRANSMITS DEPLOYMENT
INSTRUCTION OF CONTAINER TO BE DEPLOYED
CORRESPONDING TO DEPLOYMENT REQUEST RECEIVED IN S11
TO CLUSTER DETERMINED IN S14 — S15

END

# FIG. 9

PERFORM DEPLOYMENT DETERMINATION PROCESSING
(MASTER DEVICE)

HAS RESOURCE CONDITION BEEN RECEIVED? — S21 NO

YES

CONDITION DETERMINATION UNIT DETERMINES WHETHER
SPECIFIC SERVER DEVICE HAVING AMOUNT OF FREE RESOURCE
EQUAL TO OR LARGER THAN RESOURCE AMOUNT RECEIVED IN
S21 IS PRESENT IN SERVER DEVICES IN CLUSTER IN WHICH
MASTER DEVICE (ITS OWN DEVICE) IS DEPLOYED — S22

RESULT TRANSMISSION UNIT TRANSMITS RESULT OF
DETERMINATION IN S22 TO GLOBAL MASTER DEVICE — S23

END

# FIG. 10

PERFORM DEPLOYMENT DESTINATION DETERMINATION PROCESSING (MASTER DEVICE)

HAS DEPLOYMENT INSTRUCTION BEEN RECEIVED?  S24  NO

YES

CONTAINER DEPLOYMENT UNIT DEPLOYS CONTAINER CORRESPONDING TO DEPLOYMENT INSTRUCTION RECEIVED IN S24 IN ONE OF SERVER DEVICES IN CLUSTER IN WHICH MASTER DEVICE (ITS OWN DEVICE) IS DEPLOYED  S25

END

# FIG. 11

| CPU USED<br>(NUMBER OF CORES) | MEMORY USED<br>(MB) |
|---|---|
| 2 | 10 |
| 3 | 100 |

# FIG. 12

| CLUSTER ID | MASTER ID | CONNECTION DESTINATION ADDRESS |
|:---:|:---:|:---:|
| CL1 | MS1 | 100.100.100.1 |
| CL2 | MS2 | 100.100.200.1 |
| CL3 | MS3 | 100.100.300.1 |

## FIG. 13A

| SERVER ID | FREE CPU RESOURCE (NUMBER OF CORES) | FREE MEMORY RESOURCE (gb) |
|---|---|---|
| SV1 | 10 | 1.6 |
| SV2 | 2 | 1.0 |

## FIG. 13B

| SERVER ID | FREE CPU RESOURCE (NUMBER OF CORES) | FREE MEMORY RESOURCE (gb) |
|---|---|---|
| SV3 | 5 | 2.2 |
| SV4 | 3 | 0.8 |

## FIG. 13C

| SERVER ID | FREE CPU RESOURCE (NUMBER OF CORES) | FREE MEMORY RESOURCE (gb) |
|---|---|---|
| SV5 | 12 | 1.8 |

# FIG. 14

| PRIORITY | WEIGHT |
|------------|--------|
| PRIORITY A | 0.7 |
| PRIORITY B | 0.3 |

## FIG. 15

# FIG. 16

PERFORM DEPLOYMENT DESTINATION DETERMINATION
PROCESSING (GLOBAL MASTER DEVICE)

S41
HAS DEPLOYMENT REQUEST BEEN RECEIVED? — NO

YES

CONDITION TRANSMISSION UNIT TRANSMITS RESOURCE
CONDITION INCLUDING RESOURCE AMOUNT NEEDED FOR
DEPLOYMENT OF CONTAINER TO BE DEPLOYED
CORRESPONDING TO DEPLOYMENT REQUEST RECEIVED IN S41
TO EACH MASTER DEVICE — S42

S43
HAS RESULTS
AND THE LIKE RECEIVED FROM ALL MASTER
DEVICES? — NO

YES

DEPLOYMENT DESTINATION DETERMINATION UNIT
DETERMINES CLUSTER TO DEPLOY CONTAINER TO BE
DEPLOYED CORRESPONDING TO DEPLOYMENT REQUEST
RECEIVED IN S41 ON BASIS OF RESULTS AND SCORES RECEIVED
IN S43 — S44

INSTRUCTION TRANSMISSION UNIT TRANSMITS DEPLOYMENT
INSTRUCTION OF CONTAINER TO BE DEPLOYED
CORRESPONDING TO DEPLOYMENT REQUEST RECEIVED IN S41
TO CLUSTER DETERMINED IN S44 — S45

END

# FIG. 17

```
┌────────────────────────────────────────────────────┐
│   PERFORM DEPLOYMENT DETERMINATION PROCESSING        │
│              (MASTER DEVICE)                          │
└────────────────────────────────────────────────────┘
```

S51

HAS RESOURCE CONDITION BEEN RECEIVED?　　NO

YES

CONDITION DETERMINATION UNIT DETERMINES WHETHER SPECIFIC SERVER DEVICE HAVING AMOUNT OF FREE RESOURCE EQUAL TO OR LARGER THAN RESOURCE AMOUNT RECEIVED IN S21 IS PRESENT IN SERVER DEVICES IN CLUSTER IN WHICH MASTER DEVICE (ITS OWN DEVICE) IS DEPLOYED　　S52

SCORE CALCULATION UNIT CALCULATE SCORE INDICATING USE STATE OF RESOURCES IN CLUSTER IN WHICH MASTER DEVICE IS DEPLOYED ON BASIS OF USE RATE OF RESOURCES OF EACH SERVER DEVICE IN CLUSTER IN WHICH MASTER DEVICE IS DEPLOYED　　S53

RESULT TRANSMISSION UNIT TRANSMITS RESULTS OF DETERMINATION IN S52 AND SCORES CALCULATED IN S53 TO GLOBAL MASTER DEVICE　　S54

END

# FIG. 18

PERFORM DEPLOYMENT DESTINATION DETERMINATION PROCESSING (MASTER DEVICE)

S55

HAS DEPLOYMENT INSTRUCTION BEEN RECEIVED? —— NO

YES

CONTAINER DEPLOYMENT UNIT DEPLOYS CONTAINER CORRESPONDING TO DEPLOYMENT INSTRUCTION RECEIVED IN S55 TO ONE OF SERVER DEVICES IN CLUSTER IN WHICH MASTER DEVICE (ITS OWN DEVICE) IS DEPLOYED —— S56

END

Europäisches Patentamt

European Patent Office

Office européen des brevets

# EUROPEAN SEARCH REPORT

Application Number

EP 21 16 9839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/196846 A1 (FUJITSU LIMITED) 27 June 2019 (2019-06-27) * abstract * * paragraphs [0002], [0007], [0048], [0058], [0059], [0067] - [0075], [0089] - [0094], [0106] * * figures 3,8,11-13,17 * ----- | 1-12 | INV. G06F9/50 G06F8/60 |
| A | US 2019/243687 A1 (RED HAT, INC.) 8 August 2019 (2019-08-08) * the whole document * ----- | 1-12 | |
| A | EP 3 270 289 A2 (SAP SE) 17 January 2018 (2018-01-17) * the whole document * ----- | 1-12 | |

TECHNICAL FIELDS SEARCHED (IPC)

G06F

The present search report has been drawn up for all claims

| Place of search | Date of completion of the search | Examiner |
|---|---|---|
| The Hague | 11 October 2021 | Tomàs Blanch, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 9839

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2021

| Patent document cited in search report | | Publication date | Patent family member(s) | | Publication date |
|---|---|---|---|---|---|
| US 2019196846 | A1 | 27-06-2019 | JP 2019117485 A<br>US 2019196846 A1 | | 18-07-2019<br>27-06-2019 |
| US 2019243687 | A1 | 08-08-2019 | US 2019243687 A1<br>US 2020241993 A1 | | 08-08-2019<br>30-07-2020 |
| EP 3270289 | A2 | 17-01-2018 | EP 3270289 A2<br>US 2017373940 A1 | | 17-01-2018<br>28-12-2017 |

EPO FORM P0459

For more details about this annex : see Official Journal of the European Patent Office, No. 12/82

**EP 3 940 537 A1**

REFERENCES CITED IN THE DESCRIPTION

**Patent documents cited in the description**

- JP 2018028824 A
- JP 2015158811 A